# EUROPEAN PATENT SPECIFICATION

(11) **EP 2 681 744 B1**
(45) Date of publication and mention of the grant of the patent: **20.01.2016**
(21) Application number: 11860182.2
(22) Date of filing: 12.10.2011
(51) Int. Cl.: G21G 1/08, G21G 1/00, H05H 6/00

(54) **METHOD OF PREPARING PLATE-SHAPED HIGH-DENSITY LOW-ENRICHED URANIUM DISPERSION TARGET AND HIGH-DENSITY LOW-ENRICHED URANIUM TARGET PREPARED THEREBY**
VERFAHREN ZUR HERSTELLUNG EINES PLATTENFÖRMIGEN DISPERSIONSZIELS AUS HOCHDICHTEM, SCHWACH ANGEREICHERTEN URAN UND DAMIT HERGESTELLTES ZIEL AUS HOCHDICHTEM, SCHWACH ANGEREICHERTEM URAN
PROCÉDÉ DE PRÉPARATION D'UNE CIBLE DE DISPERSION DE FORME PLATE À HAUTE DENSITÉ EN URANIUM FAIBLEMENT ENRICHI AND CIBLE À HAUTE DENSITÉ EN URANIUM FAIBLEMENT ENRICHI AINSI PRÉPARÉE

(30) Priority: 04.03.2011 KR 20110019451
(43) Date of publication of application: 08.01.2014
(73) Proprietor: Korea Atomic Energy Research Institute, Daejeon 305-353 (KR)
(72) Inventor: KIM, Chang-Kyu, Daejeon 305-509 (KR); KIM, Ki-Hwan, Daejeon 305-707 (KR); LEE, Yoon-Sang, Daejeon 305-793 (KR); RYU, Ho Jin, Daejeon 305-325 (KR); JANG, Se Jung, Daejeon 305-755 (KR); PARK, Jong-Man, Daejeon 305-727 (KR); CHOI, Sun-Ju, Daejeon 305-370 (KR)
(74) Representative: EP&C
(86) International application number: PCT/KR2011/007587
(87) International publication number: WO 2012/121466

(56) References cited:
- JP-A- 7 218 697
- JP-A- 11 174 184
- JP-A- 2008 102 078
- KR-A- 19990 080 474
- KR-B1- 100 643 794
- KR-B1- 100 828 413
- US-A- 3 282 655
- US-A- 4 093 697
- US-A- 4 705 577
- US-A- 4 705 577

## Description

### [Technical Field]

The present disclosure relates to a method of preparing a plate-shaped high-density low-enriched uranium dispersion target among uranium targets used for preparing medical isotope 99Mo in which particles of a uranium alloy, in which less than 1 wt% of silicon (Si), chromium (Cr), aluminum (Al), iron (Fe), and molybdenum (Mo) are added to low-enriched uranium metal, are dispersed in an Al-Si alloy matrix, in particular, an Al-Si alloy matrix having a Si content in a range of 2 wt% to 5 wt%, and a high-density low-enriched uranium target prepared thereby.

### [Background Art]

99mTc is an element that occupies about 80% of demand for medical diagnostic radioisotopes and is a medical radioisotope which is importantly utilized in nuclear medical diagnosis of diseases. 99mTc is an artificial element which does not exist in nature and is a daughter nuclide generated by the radioactive decay of 99Mo.

Meanwhile, there are two major methods of preparing 99Mo which is the only mother nuclide of the medical radioisotope 99mTc. A first method is a method of extracting 99Mo from products generated by the nuclear fission of uranium, and a second method is a method of obtaining 99Mo by irradiating neutrons to 98Mo. However, with respect to the second method, a raw material 98Mo is difficult to be obtained and accordingly, is expensive, and radiation intensity is weak. Therefore, the first method is mainly used. 99Mo prepared by the foregoing methods generates 99mTc by means of radioactive decay and the generated 99mTc is used for disease diagnosis. However, since 99Mo has a very short half-life of 66 hours, a high-enriched uranium target having a degree of enrichment of 90% or more has been used until recently in order to increase productivity. Herein, the phrase "a degree of enrichment of 90% or more" denotes that among uranium isotopes, highly fissionable ²³⁵U 238 is included 90% or more and U is included 10% or less.

Recently, a policy, which reduces a degree of enrichment of a uranium in irradiation target material for medical radioactive isotope 99Mo from a high enrichment of about 90% to 20% or less, has been globally promoted mainly by the United States and international atomic energy agency (IAEA) as a nuclear proliferation prevention policy. However, there is a limitation in that a yield of 99Mo decreases when the degree of enrichment of the uranium in irradiation target material is reduced from a high enrichment of about 90% to 20% or less. Accordingly, efforts are underway toward a direction of increasing a total content of uranium instead of reducing a degree of enrichment of U from 90% to a low enrichment of 20%, and if possible, research has been conducted in principle by following a method of not altering target preparation process and shape that have been typically used.

For example, Argonne National Laboratory in the United States developed a target having a shape in which a thin uranium metal plate having a thickness range of about 120 µm to 150 µm are inserted between two aluminum cylinders. When neutrons are irradiated to the thin uranium metal plate in a nuclear reactor, deformation occurs due to an anisotropic microstructure and volume expansion occurs because air bubbles or the number of atoms are increased by fission gas. The foregoing volume expansion rapidly increases due to the fact that the higher the temperature is, the greater the atomic diffusion motion is. Therefore, a target is developed with the foregoing design in order to effectively dissipate a lot of heat generated from nuclear fission. However, there are limitations in that a target of a large-scale 99Mo producer used in a process for preparing 99Mo is generally a plate shape and a process becomes complicated because aluminum cylindrical housings are removed after nuclear fission and then a post treatment has to be performed.

Meanwhile, the target of the large-scale 99Mo producer is currently an aluminide which is an alloy of high-enriched uranium and aluminum, and is a melt-alloyed material by adding about 18 wt% uranium metal to aluminum metal. The aluminide has a microstructure in which UAl₃ and UAl₄ phases precipitate and are dispersed in an Al matrix during cooling, and may prevent deterioration of behavior due to a temperature rise because thermal conductivity is very good to maintain the core temperature low. However, a uranium content of the aluminide is low of about 1.5 g-U/cc. Since UAl₂ among intermetallic compounds of uranium aluminides has a uranium content higher than those of UAl₃ and UAl₄, UAl₂ powder is first prepared and then a dispersed material formed by mixing and rolling with aluminum powder has an increased uranium content of about 3.0 g-U/cc. Recently in South Africa, a uranium target, in which a degree of enrichment of a target material for 99Mo was reduced at the expense of some disadvantage from 45% to 20% by not dispersing a uranium-aluminum alloy material but dispersing a uranium aluminide (UAl₂) in an aluminum matrix, was developed by using the foregoing principle. However, the foregoing method has a limitation in that the productivity of 99Mo decreases more than when a high-enriched uranium target is used. The decrease in the yield of 99Mo eventually leads to the decrease in the yield of 99mTc and the decrease in the yield may be a very big limitation because a large amount of 99Mo may not be prepared at once due to the short half-life of 99Mo.

Accordingly, the inventors of the present invention completed the present invention during conducting of research related to a preparation of a uranium target, in which the yield of 99Mo does not decrease while coping with the use of a low-enriched uranium target which is being promoted globally.

### [Disclosure]

### [Technical Problem]

Embodiments of the present invention are directed to provide a method of preparing a plate-shaped high-density low-enriched uranium dispersion target while maintaining a shape of a high-enriched uranium target and minimizing changes in the preparation process thereof, and the plate-shaped high-density low-enriched uranium dispersion target prepared thereby.

Embodiments of the present invention are also directed to provide a method of preparing medical radioactive 99Mo by using the high-density low-enriched uranium target prepared by the foregoing method.

### [Technical Solution]

According to an aspect of the present invention, there is provided a method of preparing a plate-shaped high-density low-enriched uranium dispersion target including: preparing a uranium alloy powder from a low-enriched uranium raw material including less than 1 wt% of one or more selected from the group consisting of aluminum (Al), silicon (Si), chromium (Cr), iron (Fe), and molybdenum (Mo) by using a centrifugal atomization method; mixing the prepared uranium alloy powder with an Al-Si alloy powder within a range of 40 vol% to 50 vol% to prepare a compact; and rolling the prepared compact. Also, the present invention provides a method of preparing medical radioactive 99Mo including: irradiating neutrons to the high-density low-enriched uranium target prepared by the foregoing method; dissolving the irradiated target with a basic solution to remove an aluminum cladding material and a matrix material; treating a product processed in the foregoing step with an acidic solution to recover unreacted uranium; and extracting 99Mo from an acid-treated product in the foregoing step.

### [Advantageous Effects]

According to the preparation method of the present invention, the yield of 99Mo may not decrease but rather increase even though a low-enriched uranium target in accordance with the recommendation of IAEA is used. Also, an additional process may not be required because a conventional target shape may be maintained. Further, the amount of generated nuclear waste may be reduced because aluminum cladding material and matrix material are removed by first treating with a basic solution and then an acid treatment is performed in a preparation process of 99Mo.

### [Description of Drawings]

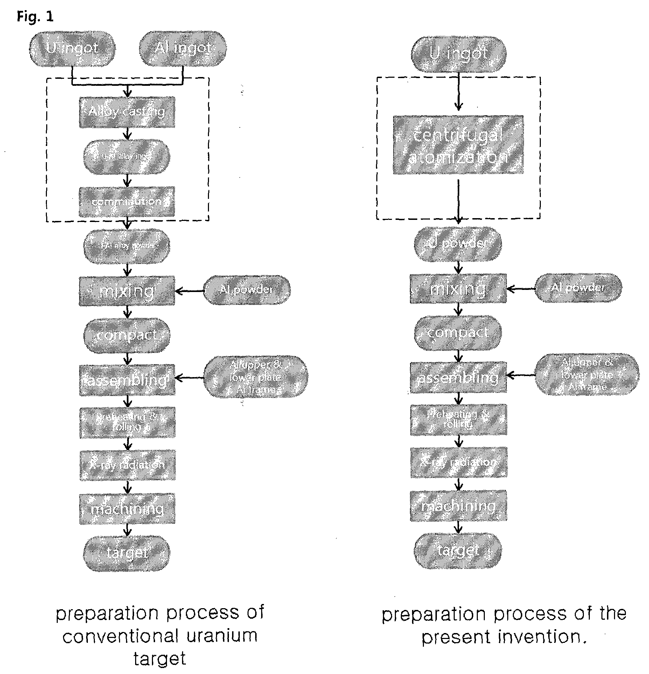

FIG. 1 compares a preparation process flow chart of a conventional uranium target and a preparation process flow chart according to the present invention.

### [Best Mode]

99mTc is an element that occupies about 80% of demand for medical diagnostic radioisotopes and is a medical radioisotope which is importantly utilized in nuclear medical diagnosis of diseases, and the only mother nuclide thereof is 99Mo. Since 99Mo has a very short half-life of 96 hours, it is impossible to produce and store 99Mo more than necessary, and thus, mass production of 99Mo is very advantageous. Therefore, high-enriched uranium targets have been used to date in order to secure the proper yield of 99Mo, but efforts to change the high-enriched uranium target to a low-enriched uranium target have continued in relation to the recent global nuclear proliferation prevention. The present invention relates to a method of preparing a uranium target in which the yield of 99Mo is not reduced even though a low-enriched uranium target is used so as to accord with the foregoing recommendation and a method of preparing 99Mo by using the uranium target prepared thereby.

Hereinafter, the present invention will be described in detail.

The present invention provides a method of preparing a plate-shaped high-density low-enriched uranium dispersion target including:
preparing a uranium alloy powder from a low-enriched uranium raw material including less than 1 wt% of one or more selected from the group consisting of Al, Si, Cr, Fe, and Mo by using a centrifugal atomization method (step 1);
mixing the prepared uranium alloy powder with an Al-Si alloy powder within a range of 40 vol% to 50 vol% to prepare a compact (step 2); and rolling the prepared compact (step 3).

Hereinafter, the present invention is described in detail step by step.

step 1 of the present invention is preparing a uranium alloy powder from a low-enriched uranium raw material including less than 1 wt% of one or more selected from the group consisting of Al Si, Cr, Fe, and Mo by using a centrifugal atomization method and is an step of preparing a fissionable raw material which will be subsequently dispersed in a matrix.

Uranium exists in isotopic forms of ²³⁸U and ²³⁵U, and much less fissionable ²³⁸U exist in about 99.3% and highly fissionable ²³⁵U exist in about 0.7% in nature. In the present invention, the term "low-enriched uranium" denotes uranium that includes less than 20% of highly fissionable ²³⁵U, and high-enriched uranium used for 99Mo production denotes uranium that includes 235 more than 90% of U.

The low-enriched uranium raw material used in the present invention may be pure uranium metal, a uranium aluminide, or a uranium oxide, but the low-enriched uranium raw material, for example, may be pure uranium metal. The reason for this is that since a high-density target is prepared in the present invention in order to prevent a decrease in the yield of 99Mo instead of using a low-enriched uranium target, the raw material may be pure uranium metal in order to increase the density of uranium in a target.

However, the low-enriched uranium raw material of the present invention includes less than 1 wt% of one or more selected from the group consisting of Al, Si, Cr, Fe, and Mo. When the raw material includes an element such as Al, Si, Cr, Fe, and Mo, grains of the uranium alloy powder are refined such that limitations with respect to swelling and deformation according to neutron irradiation or temperature changes may be resolved. However, there is a limitation of decreasing the density of uranium, i.e., a uranium content, when the foregoing elements are included more than 1 wt%.

The uranium alloy powder in the present invention, which will be dispersed in the matrix, is prepared by using a centrifugal atomization method. The centrifugal atomization method mentioned in the present invention denotes a method using a preparation apparatus of nuclear fuel powder described in Korean Patent Registration No. 10-279880. That is, in the method, when a molten alloy is discharged through a nozzle onto a rotating disc, fine particles are formed by means of a centrifugal force and fly to a chamber wall. The fine particles are cooled by cooling gas during the flight and become spherical fine powder forms by surface tent ion when the particles arrive at the chamber wall to be collected in a collecting container. At this time, the size of the alloy powder may be differently distributed in a range of about 50 µm to about 500 µm according to a rotating speed, a supply amount of melt, a disc size, or a melt temperature. Since particles of the melt have very large specific surface areas, the solidification rate of the melt is fast such that a microstructure having fine grains is obtained. When the particles are prepared by using the foregoing method, productivity is improved because a preparation process is simple and a loss rate in the preparation process becomes low and purity may also be very high because impurity mixing is prevented.

Also, another desirable reason for preparing the uranium alloy powder by using the centrifugal atomization method rather than using a conventional method of preparing a powder by comminution of a uranium alloy ingot after preparation thereof is that the formed particles have spherical shapes and are fine particles. The grain size is about few hundred micrometers when the powder is prepared by the conventional method, but a microstructure having fine grains of about few micrometers is formed when the powder is prepared by the centrifugal atomization method. Since the uranium particles in the present invention have spherical shapes, rolling is facilitated, and target performance may be improved because the swelling of grains is low with respect to neutron irradiation and temperature changes.

step 2 of the present invention is mixing the prepared uranium alloy powder with an Al-Si alloy powder within a range of 40 vol% to 50 vol% to prepare a compact.

The uranium alloy powder in the present invention may be mixed with an Al-Si alloy powder forming a matrix within a range of 40 vol% to 50 vol%. This is for preparing a high-density target instead of using low-enriched uranium. That is, a yield may decrease because the amount of 99Mo generated by nuclear fission is small when the uranium alloy powder is mixed less than 40 vol%. On the other hand, rolling may be difficult when the mixed amount of the uranium alloy powder is more than 50 vol%.

The Al-Si alloy powder acts as a matrix containing the uranium powder by subsequent rolling. Since the density and thermal conductivity may be decreased by the interaction generated at an interface between aluminum and uranium when pure aluminum is used, the Al-Si alloy powder is used to prevent interaction.

At this time, a Si content included in the Al-Si alloy powder may be in a range of 2 wt% to 5 wt%. When the Si content is less than 2 wt%, a limitation of the heat generation property of the uranium target during nuclear fission is generated because the Al-Si alloy powder insufficiently acts to prevent the interaction between aluminum and uranium. When the Si content is more than 5 wt%, there are limitations in that thermal conductivity decreases and Si remains as a solid foreign matter in a solution after being dissolved with an alkaline solution.

step 3 according to the present invention is rolling the prepared compact and is an step in which a compact is prepared with the mixed powder in step 2 and then a plate-shaped uranium target is prepared by rolling the compact.

The rolling of step 3 may be performed by a publicly known method. For example, since a method of assembling after putting the compact in a sandwich-type frame, which is used in a conventional method of preparing a uranium target for producing 99Mo, welding, and rolling may be used as it is, additional processing costs may not be required. Therefore, the preparation method according to the present invention may be easily applied to a process using a current high-enriched uranium target.

Also, the present invention provides a high-density low-enriched uranium target prepared by the foregoing method. A uranium target for 99Mo production, which has been used to date, is a high-enriched uranium target and there is a risk of being used for military purposes. Accordingly, using a low-enriched uranium target has been recently recommended globally. However, the yield of 99Mo decreases when the low-enriched target is used and as a result, the yield of 99mTc occupying about 80% of demand for medical diagnostic radioisotopes was decreased. The uranium target prepared by the preparation method of the present invention uses a low-enriched uranium raw material so that there is no risk of being used for military purposes, and since it is also a high-density uranium target, the yield does not decrease when 99Mo is produced by using the uranium target of the present invention. Also, additional processing costs may not be required because it is possible to prepare the foregoing target in the same shape as a conventional uranium target.

Since the uranium target according to the present invention uses a low-enriched uranium raw material, the uranium target must be equivalent to the high-enriched uranium target in terms of fissionable uranium density in order to prevent a decrease in the yield of 99Mo. A target used for actual 99Mo production contains about 1.5 g-U/cc of about 90% enriched uranium. With respect to 20% enriched uranium, uranium density has to be 6.75 g-U/cc in 235 order to equally contain fissionable uranium U. However, since the low-238 enriched uranium contains a large amount of U having a large neutron absorption rate, the density must be about 7.2 g-U/cc in order to equally produce 99Mo. The density of a centrifugally atomized uranium particle is 18 g-U/cc or more. Therefore, about 40 vol% of the uranium particles must be dispersed in order to obtain a density of 7.2 g-U/cc at a target core. In the technique of preparing plate-shaped dispersion-type fuel by rolling, the maximum volume fraction of a dispersed material is known to be about 50%. Therefore, the uranium density of the uranium target may be in a range of 7.5 g-U/cc to 9.0 g-U/cc. When the uranium density is less than 7.5 g-U/cc and 99Mo is produced by using the uranium target thus prepared, the yield may be decreased in comparison to the case of using a high-enriched uranium target. When the uranium density is more than 9.0 g-U/cc, there is a limitation of preparing a target.

Also, the present invention provides a method of preparing medical radioactive 99Mo including:
irradiating neutrons to the high-density low-enriched uranium target (step a);
dissolving the irradiated target with a basic solution to remove an aluminum cladding material and a matrix material (step b);
treating a product processed in step b with an acidic solution to recover unreacted uranium (step c); and
extracting 99Mo from an acid-treated product in step c (step d).

Hereinafter, the present invention is described in detail step by step.
step a of the present invention is neutron-irradiating to the high-density low-enriched uranium target prepared by the method of the present invention and is an step in which the uranium target prepared by the method of the present invention is charged into a nuclear reactor and undergoes nuclear fission by being irradiated with neutrons. Fission products are generated through a fission process. About 70 atomic species are generated when uranium undergoes nuclear fission. The fraction of atom existing as gas in the fission products is large of about 30%. A solid element mostly exists as a single atom and thus, the volume thereof very slowly expands almost at a fission ratio. However, gas atoms induce volume expansion during a process of forming gas bubbles through forming and growing molecules by transferring and combining at defects. When the temperature is high, the transfer rate of the gas atom increases and thus, the volume expansion exponentially increases. Therefore, the temperature of the target core must be lowered if possible. For this purpose, the present invention uses a very thin plate-shaped core in which uranium particles are dispersed in an Al matrix having excellent thermal conductivity. A target thickness is in a range of about 1.3 mm to 1.6 mm, and a core thickness is in a range of about 0.7 mm to 1 mm. From the result of calculating the temperature rise difference between the target core and a surface under the condition of irradiating at about 250 W/cm² in a reactor by using a plate-code developed for predicting the burn-up behavior of plate-shaped fuel for a research reactor, the temperature difference is less than about 5°C and it is considered that the swelling induced by fission-generated gas due to the temperature rise is not large. The amount of temperature rise of the Al cladding material is small of about 1.2°C, but temperature rise at an interface between cooling water and a target cladding surface is relatively large. The amount of the temperature rise at the interface is about 20°C at a heat flux of about 250 W/cm² when the flow rate of the cooling water is about 6 m/sec. Even in the case of assuming the typical temperature of the cooling water as relatively high of 45°C, the temperature of the target core is very low of about 71°C. Therefore, it is considered that there is almost no swelling effect due to the transfer and combination of the fission-generated gas atoms caused by the temperature rise during the irradiating of the neutrons to the uranium target according to the present invention.
step b of the present invention is dissolving a product generated through the neutron irradiation with a basic solution to remove an aluminum cladding material and a matrix material and is an step for reducing the amount of nuclear waste by first removing aluminum before treating intermediate-level nuclear waste. That is, aluminum, which is low-level nuclear waste among materials generated after neutron irradiation, is first removed and intermediate-level waste is treated later, and thus, the amount of the intermediate-level waste requiring special disposal may be reduced. The basic solution used at this time may be sodium hydroxide or the like, but the basic solution is not limited thereto as long as it is able to separate aluminum from a product after the neutron irradiation.
step c of the present invention is treating a processed product with an acidic solution to recover unreacted uranium and is an step in which an acid treatment is performed on the unreacted uranium powder in order to recover useful radioisotope materials from the uranium powder included in the product, in which aluminum is removed by a base treatment after the neutron irradiation.

The unreacted uranium is intermediate-level nuclear waste and requires special nuclear waste disposal such as solidification or landfill, and high costs for the foregoing disposal are required. Therefore, processing costs may be greatly reduced when the generation amount of the foregoing intermediate-level nuclear waste is reduced. In the present invention, the generation amount of the intermediate-level nuclear waste is reduced in step c by first removing aluminum through a base treatment. The acidic solution used in the present step, for example, may be a nitric acid solution, but the acidic solution is not limited thereto as long as it is able to recover unreacted uranium or the like.
step d of the present invention is extracting 99Mo from an acid-treated product and is an step of finally extracting 99Mo from a product in which aluminum and unreacted uranium are recovered from a fission product generated by the nuclear fission of the uranium target. The present separation step may be performed through a publicly known method such as precipitation separation using α-benzoinoxime.

According to the preparation method of the present invention, the yield of 99Mo may not decrease but rather increase even though a low-enriched uranium target in accordance with the recommendation of IAEA is used. Also, an additional process may not be required because a conventional target shape may be maintained. Further, the amount of generated nuclear waste may be reduced because aluminum cladding material and matrix material are removed by first treating with a basic solution and then an acid treatment is performed in a preparation process of 99Mo.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method of preparing a plate-shaped high-density low-enriched uranium dispersion target, the method comprising:
step 1 - preparing a uranium alloy powder from a low-enriched uranium raw material including less than 1 wt% of one or more selected from the group consisting of aluminum, silicon, chromium, iron, and molybdenum by using a centrifugal atomization method;
step 2 -
mixing the prepared uranium alloy powder with an Al-Si alloy powder within a range of 40 vol% to 50 vol% to prepare a compact; and
step 3 - rolling the prepared compact.

2. The method as set forth in claim 1, wherein Si in the Al-Si alloy powder of step 2 is included in a range of about 2 wt% to about 5 wt%.

3. A plate-shaped high-density low-enriched uranium dispersion target prepared by the method of claim 1.

4. The plate-shaped high-density low-enriched uranium dispersion target as set forth in claim 3, wherein a uranium density of the uranium target is in a range of about 7.5 g-U/cc to about 9.0 g-U/cc.

5. The plate-shaped high-density low-enriched uranium dispersion target as set forth in claim 3, wherein the high-density low-enriched uranium target is used as an irradiation target for medical radioactive 99Mo.

6. A method of preparing medical radioactive 99Mo, the method comprising:
step a - irradiating neutrons to the uranium target of claim 3 ;
step b - dissolving the irradiated target with a basic solution to remove an aluminum cladding material and a matrix material;
step c - treating a product processed in step b with an acidic solution to recover unreacted uranium; and
step d - extracting 99Mo from an acid-treated product in step c

7. The method as set forth in claim 6, wherein the basic solution of step b is a sodium hydroxide solution and the acidic solution of step c is a nitric acid solution.

## Patentansprüche

1. Verfahren zur Herstellung eines plattenförmigen Dispersionsziels aus hochdichtem, schwach angereichertem Uran, wobei das Verfahren Folgendes umfasst:
Schritt 1 - das Herstellen eines Uranlegierungspulvers aus einem schwach angereicherten Uranrohmaterial, das weniger als 1 Gew.-% eines oder mehrerer umfasst ausgewählt aus der Gruppe bestehend aus Aluminium, Silicium, Chrom, Eisen und Molybdän, durch verwenden eines Zentrifugalatomisierungsverfahrens;
Schritt 2 - das Mischen des hergestellten Uranlegierungspulvers mit einem Al-Si-Legierungspulver innerhalb eines Bereichs von 40 Vol.-% bis 50 Vol.-, um eine Kompaktsubstanz herzustellen; und
Schritt 3 - das Walzen der hergestellten Kompaktsubstanz.

2. Verfahren wie in Anspruch 1 aufgeführt, wobei Si in dem Al-Si-Legierungspulver von Schritt 2 in einem Bereich von etwa 2 Gew.-% bis etwa 5 Gew.-% eingeschlossen ist.

3. Plattenförmiges Dispersionsziel aus hochdichtem, schwach angereichertem Uran, das durch das Verfahren von Anspruch 1 hergestellt wird.

4. Plattenförmiges Dispersionsziel aus hochdichtem, schwach angereichertem Uran wie in Anspruch 3 aufgeführt, wobei eine Urandichte des Uranziels im Bereich von etwa 7,5 g-U/cm³ bis etwa 9,0 g-U/cm³ liegt.

5. Plattenförmiges Dispersionsziel aus hochdichtem, schwach angereichertem Uran wie in Anspruch 3 aufgeführt, wobei das hochdichte, schwach angereicherte Uranziel als Bestrahlungsziel für medizinisches radioaktives 99Mo verwendet wird.

6. Verfahren für die Herstellung eines medizinisch radioaktiven 99Mo, wobei das Verfahren Folgendes umfasst:
Schritt a - das Strahlen von Neutronen zum Uranziel nach Anspruch 3;
Schritt b - das Lösen des bestrahlten Ziels mit einer basischen Lösung zum Entfernen eines Aluminiumverkleidungsmaterials und eines Matrixmaterials;
Schritt c - das Behandeln eines in Schritt b verarbeiteten Produkts mit einer sauren Lösung, um unreagiertes Uran zu gewinnen; und
Schritt d - das Extrahieren von 99Mo aus einem säurebehandelten Produkt in Schritt c.

7. Verfahren wie in Anspruch 6 aufgeführt, wobei die basische Lösung von Schritt b eine Natriumhydroxidlösung ist und wobei die saure Lösung von Schritt c eine Salpetersäurelösung ist.

## Revendications

1. Procédé de préparation d'une cible de dispersion d'uranium faiblement enrichi de haute densité en forme de plaque, le procédé comprenant :
étape 1 -
la préparation d'une poudre d'alliage d'uranium à partir d'une matière première à base d'uranium faiblement enrichi comprenant moins de 1% en poids d'un ou de plusieurs éléments choisis dans le groupe comportant l'aluminium, le silicium, le chrome, le fer et le molybdène à l'aide d'un procédé de pulvérisation centrifuge ;
étape 2 -
le mélange de la poudre d'alliage d'uranium préparée avec une poudre d'alliage Al-Si dans une gamme allant de 40% en volume à 50% en volume pour préparer un comprimé ; et
étape 3 -
laminer le comprimé préparé.

2. Procédé selon la revendication 1, dans lequel le Si dans la poudre d'alliage de Al-Si de l'étape 2 est compris dans une gamme allant d'environ 2% en poids à environ 5% en poids.

3. Cible de dispersion d'uranium faiblement enrichi de haute densité en forme de plaque préparée par le procédé de la revendication 1.

4. Cible de dispersion d'uranium faiblement enrichi de haute densité en forme de plaque selon la revendication 3, dans laquelle la densité d'uranium de la cible d'uranium est dans une gamme allant d'environ 7,5 g de U/cc à environ 9,0 g de U/cc.

5. Cible de dispersion d'uranium faiblement enrichi de haute densité en forme de plaque selon la revendication 3, la cible d'uranium faiblement enrichi à haute densité étant utilisée comme cible d'irradiation pour du 99Mo radioactif à usage médical.

6. Procédé de préparation de 99Mo radioactif à usage médical, le procédé comprenant :
étape a -
l'irradiation de la cible d'uranium de la revendication 3 avec des neutrons ;
étape b -
la dissolution de la cible irradiée avec une solution basique pour supprimer un matériau de placage d'aluminium et un matériau de matrice ;
étape c -
le traitement d'un produit traité à l'étape b avec une solution acide pour récupérer l'uranium qui n'a pas réagi ; et
étape d -
l'extraction du 99Mo à partir d'un produit traité à l'acide à l'étape c.

7. Procédé selon la revendication 6, dans lequel la solution basique de l'étape b est une solution d'hydroxyde de sodium et la solution acide de l'étape c est une solution d'acide nitrique.
